# EUROPEAN PATENT APPLICATION

(11) **EP 4 738 199 A1**
(43) Date of publication of application: **06.05.2026**
(21) Application number: 25202660.4
(22) Date of filing: 17.09.2025
(51) Int. Cl.: G06N 3/0475, G06N 3/047, G06N 3/045, G06N 5/04, G06N 3/084, G06N 3/088

(54) **AUTONOMOUS DRIVING MODEL BASED ON MULTIMODAL LARGE MODEL, TRAINING METHOD, AND AUTONOMOUS DRIVING METHOD**

(30) Priority: 31.10.2024 CN 202411545595
(71) Applicant: Apollo Intelligent Driving Technology (Beijing) Co., Ltd., Haidian District Beijing 100085 (CN)
(72) Inventor: HUANG, Jizhou, BEIJING 100085 (CN); ZENG, Zengfeng, BEIJING 100085 (CN)
(74) Representative: Isarpatent

(57) **Abstract**

The present disclosure provides an autonomous driving model based on a multimodal large model, a training method, an autonomous driving method, and relates to the technical field of computers, and in particular to the technical fields of autonomous driving and artificial intelligence. An implementation solution includes: obtaining a training corpus dataset including at least a visual-text aligned corpus and a spatial understanding training corpus for an autonomous driving scenario; encoding, using a vision encoder, visual data in the visual-text aligned corpus to obtain encoded data; mapping the encoded data using a mapping layer; separately processing, using a generation layer, the mapped encoded data, text data, and the spatial understanding training corpus to obtain a first prediction result and a second prediction result of the autonomous driving model; and adjusting a parameter of the autonomous driving model based on at least the first prediction result and the second prediction result. The autonomous driving model trained according to embodiments of the present disclosure has both a multimodal information understanding capability and a reasoning capability in an autonomous driving scenario.

## Description

### TECHNICAL FIELD

The present disclosure relates to the technical field of computers, in particular to the technical fields of autonomous driving and artificial intelligence, and specifically to an autonomous driving model based on a multimodal large model, a training method, an autonomous driving method, an apparatus, an electronic device, a computer-readable storage medium, a computer program product, and a vehicle.

### BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include the technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

The autonomous driving model is used to generate driving decisions based on environmental information of a current driving scenario and driving data of a vehicle, thereby achieving vehicle control.

Methods described in this section are not necessarily methods that have been previously conceived or employed. It should not be assumed that any of the methods described in this section is considered to be a conventional technology just because they are included in this section, unless otherwise indicated expressly. Similarly, the problem mentioned in this section should not be considered to be universally recognized in any conventional technology, unless otherwise indicated expressly.

### SUMMARY

The present disclosure provides an autonomous driving model based on a multimodal large model, a training method, an autonomous driving method, an apparatus, an electronic device, a computer-readable storage medium, a computer program product, and a vehicle.

According to an aspect of the present disclosure, a method for training an autonomous driving model is provided. The autonomous driving model includes a vision encoder, a mapping layer, and a generation layer, and the method includes: obtaining a training corpus dataset, where the training corpus dataset includes at least a visual-text aligned corpus and a spatial understanding training corpus for an autonomous driving scenario; encoding, using the vision encoder, visual data in the visual-text aligned corpus to obtain encoded data; mapping the encoded data using the mapping layer; processing, using the generation layer, the mapped encoded data and text data in the visual-text aligned corpus to obtain a first prediction result of the autonomous driving model; processing, using the generation layer, the spatial understanding training corpus to obtain a second prediction result of the autonomous driving model; and adjusting a parameter of the autonomous driving model based on at least the first prediction result and the second prediction result.

According to another aspect of the present disclosure, an autonomous driving method is provided. The method includes: obtaining visual data and text data of a current scenario; and inputting the visual data and the text data of the current scenario into an autonomous driving model to obtain a predicted driving decision output by the autonomous driving model, and controlling a vehicle to perform autonomous driving based on the predicted driving decision, where the autonomous driving model is trained using the method provided in the embodiments of the present disclosure.

According to another aspect of the present disclosure, an apparatus for training an autonomous driving model is provided. The autonomous driving model includes a vision encoder, a mapping layer, and a generation layer, and the apparatus includes: an obtaining unit configured to obtain a training corpus dataset, where the training corpus dataset includes at least a visual-text aligned corpus and a spatial understanding training corpus for an autonomous driving scenario; an encoding unit configured to encode, using the vision encoder, visual data in the visual-text aligned corpus to obtain encoded data; a mapping unit configured to map the encoded data using the mapping layer; a generation unit configured to process, using the generation layer, the mapped encoded data and text data in the visual-text aligned corpus to obtain a first prediction result of the autonomous driving model, and process, using the generation layer, the spatial understanding training corpus to obtain a second prediction result of the autonomous driving model; and a parameter adjustment unit configured to adjust a parameter of the autonomous driving model based on at least the first prediction result and the second prediction result.

According to another aspect of the present disclosure, an autonomous driving apparatus is provided. The apparatus includes: an obtaining unit configured to obtain visual data and text data of a current scenario; and an autonomous driving decision unit configured to input the visual data and the text data of the current scenario into an autonomous driving model to obtain a predicted driving decision output by the autonomous driving model, and control a vehicle to perform autonomous driving based on the predicted driving decision, where the autonomous driving model is trained using the method provided in the embodiments of the present disclosure.

According to another aspect of the present disclosure, an autonomous driving model trained using the method according to the embodiments of the present disclosure is provided. The model includes: an encoding layer configured to encode input visual data to obtain encoded data; a mapping layer configured to map the encoded data; and a generation layer configured to process the mapped encoded data and the input text data to obtain an output result of the autonomous driving model.

According to another aspect of the present disclosure, an electronic device is further provided. The electronic device includes: at least one processor; and a memory communicatively connected to the at least one processor, where the memory stores instructions executable by the at least one processor, and the instructions, when executed by the at least one processor, cause the at least one processor to perform the method according to the embodiments of the present disclosure.

According to another aspect of the present disclosure, a non-transitory computer-readable storage medium storing computer instructions is further provided. The computer instructions are used to cause a computer to perform the method according to the embodiments of the present disclosure.

According to another aspect of the present disclosure, a computer program product is further provided, including a computer program, where the computer program, when executed by a processor, causes the method according to the embodiments of the present disclosure to be implemented.

According to another aspect of the present disclosure, an autonomous vehicle is further provided. The vehicle includes the autonomous driving apparatus described above or the electronic device described above.

The autonomous driving model trained according to the embodiments of the present disclosure has both a multimodal information understanding capability and a reasoning capability in an autonomous driving scenario, and also has general knowledge of the large model, so that the autonomous driving model can well cope with various driving scenarios in an autonomous driving process.

It should be understood that the content described in this section is not intended to identify critical or important features of the embodiments of the present disclosure, and is also not intended to limit the scope of the present disclosure. Other features of the present disclosure will be readily understood with reference to the following description.

### BRIEF DESCRIPTION OF THE DRAWINGS

The accompanying drawings show exemplary embodiments and form a part of the specification, and are used to explain exemplary implementations of the embodiments together with the written description of the specification. The embodiments shown are merely for illustrative purposes and do not limit the scope of the claims. Throughout the accompanying drawings, the same reference numerals denote similar but not necessarily same elements.
FIG. 1 is a schematic diagram of an exemplary system in which various methods described herein can be implemented according to an embodiment of the present disclosure;
FIG. 2A is an exemplary flowchart of a method for training an autonomous driving model according to an embodiment of the present disclosure;
FIG. 2B shows an exemplary process of segmenting and encoding an image;
FIG. 3 is an exemplary flowchart of a training process according to an embodiment of the present disclosure;
FIG. 4 shows an exemplary process of a chain-of-thought reasoning strategy according to an embodiment of the present disclosure;
FIG. 5 is a flowchart of chain-of-thought reasoning according to an embodiment of the present disclosure;
FIGs. 6A and 6B show input images used in an exemplary chain-of-thought reasoning process;
FIG. 7A is an exemplary flowchart of an autonomous driving method according to an embodiment of the present disclosure;
FIG. 7B is an exemplary structure of an autonomous driving model according to an embodiment of the present disclosure;
FIG. 8 is an exemplary block diagram of an apparatus for training an autonomous driving model according to an embodiment of the present disclosure;
FIG. 9 is an exemplary block diagram of an autonomous driving apparatus according to an embodiment of the present disclosure; and
FIG. 10 is a structural block diagram of an exemplary electronic device that can be used to implement an embodiment of the present disclosure.

### DETAILED DESCRIPTION OF EMBODIMENTS

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described here, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from another. In some examples, a first element and a second element may refer to a same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of the listed terms.

The embodiments of the present disclosure will be described below in detail with reference to the accompanying drawings.

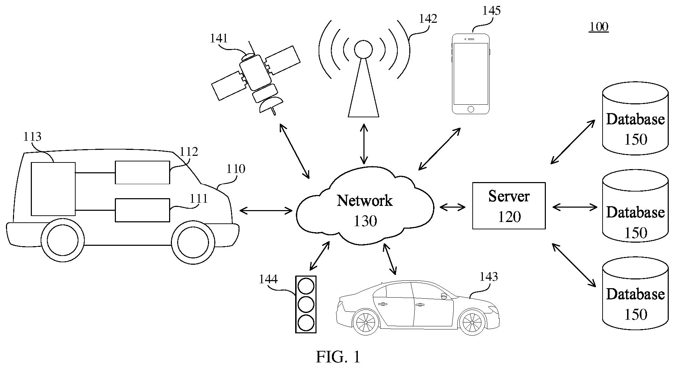

FIG. 1 is a schematic diagram of an exemplary system 100 in which various methods and apparatuses described herein can be implemented according to an embodiment of the present disclosure. Referring to FIG. 1, the system 100 includes a motor vehicle 110, a server 120, and one or more communication networks 130 that couple the motor vehicle 110 to the server 120.

In this embodiment of the present disclosure, the motor vehicle 110 may include a computing device according to embodiments of the present disclosure and/or may be configured to perform the method according to embodiments of the present disclosure.

The server 120 can run one or more services or software applications that enable a method of the embodiments in the present disclosure to be implemented. In some embodiments, the server 120 may further provide other services or software applications that may include a non-virtual environment and a virtual environment. In the configuration shown in FIG. 1, the server 120 may include one or more components that implement functions performed by the server 120. These components may include software components, hardware components, or a combination thereof that can be executed by one or more processors. A user of the motor vehicle 110 may sequentially use one or more client applications to interact with the server 120, thereby utilizing the services provided by these components. It should be understood that various different system configurations are possible, and may be different from that of the system 100. Therefore, FIG. 1 is an example of the system for implementing various methods described herein, and is not intended to be limiting.

The server 120 may include one or more general-purpose computers, a dedicated server computer (for example, a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above operating systems and any commercially available server operating system. The server 120 can also run any one of various additional server applications and/or middle-tier applications, including an HTTP server, an FTP server, a CGI server, a JAVA server, a database server, etc.

In some implementations, the server 120 may include one or more applications to analyze and merge data feeds and/or event updates received from the motor vehicle 110. The server 120 may further include one or more applications to display the data feeds and/or real-time events via one or more display devices of the motor vehicle 110.

The network 130 may be any type of network well known to those skilled in the art, and may use any one of a plurality of available protocols (including but not limited to TCP/IP, SNA, IPX, etc.) to support data communication. As a mere example, the one or more networks 130 may be a satellite communication network, a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and other networks.

The system 100 may further include one or more databases 150. In some embodiments, these databases can be configured to store data and other information. For example, one or more of the databases 150 can be configured to store information such as an audio file and a video file. The databases 150 may reside at various locations. For example, a database used by the server 120 may be locally in the server 120, or may be remote from the server 120 and may communicate with the server 120 via a network-based or dedicated connection. The databases 150 may be of different types. In some embodiments, the database used by the server 120 may be a relational database. One or more of these databases can store, update, and retrieve data from or to the database, in response to a command.

In some embodiments, one or more of the databases 150 may also be used by an application to store application data. The database used by the application may be of different types, for example, may be a key-value repository, an object repository, or a regular repository backed by a file system.

The motor vehicle 110 may include a sensor 111 for sensing surroundings. The sensor 111 may include one or more of the following sensors: a visual camera, an infrared camera, an ultrasonic sensor, a millimeter-wave radar, and a lidar (LiDAR). Different sensors can provide different detection precision and ranges. Cameras can be mounted in the front of, at the back of, or at other locations of the vehicle. Visual cameras can capture the situation inside and outside the vehicle in real time and present it to the driver and/or passengers. In addition, by analyzing the image captured by the visual cameras, information such as indications of traffic lights, conditions of crossroads, and operating conditions of other vehicles can be obtained. Infrared cameras can capture objects in night vision. Ultrasonic sensors can be mounted around the vehicle to measure the distances of objects outside the vehicle from the vehicle using characteristics such as the strong ultrasonic directivity. Millimeter-wave radars can be mounted in the front of, at the back of, or at other locations of the vehicle to measure the distances of objects outside the vehicle from the vehicle using the characteristics of electromagnetic waves. Lidars can be mounted in the front of, at the back of, or at other locations of the vehicle to detect edge and shape information of objects, so as to perform object recognition and tracking. Due to the Doppler effect, the radar apparatuses can also measure the velocity changes of vehicles and moving objects.

The motor vehicle 110 may further include a communication apparatus 112. The communication apparatus 112 may include a satellite positioning module that can receive satellite positioning signals (for example, BeiDou, GPS, GLONASS, and GALILEO) from a satellite 141 and generate coordinates based on the signals. The communication apparatus 112 may further include a module for communicating with a mobile communication base station 142. The mobile communication network can implement any suitable communication technology, such as GSM/GPRS, CDMA, LTE, and other current or developing wireless communication technologies (such as 5G technology). The communication apparatus 112 may further have an Internet of Vehicles or vehicle-to-everything (V2X) module, which is configured to implement communication between the vehicle and the outside world, for example, vehicle-to-vehicle (V2V) communication with other vehicles 143 and vehicle-to-infrastructure (V2I) communication with infrastructures 144. In addition, the communication apparatus 112 may further have a module configured to communicate with a user terminal 145 (including but not limited to a smartphone, a tablet computer, or a wearable apparatus such as a watch) by using a wireless local area network or Bluetooth of the IEEE 802.11 standards. With the communication apparatus 112, the motor vehicle 110 may further access the server 120 via the network 130.

The motor vehicle 110 may further include a control apparatus 113. The control apparatus 113 may include a processor that communicates with various types of computer-readable storage apparatuses or media, such as a central processing unit (CPU) or a graphics processing unit (GPU), or other dedicated processors. The control apparatus 113 may include an autonomous driving system for automatically controlling various actuators in the vehicle. The autonomous driving system is configured to control a powertrain, a steering system, a braking system, and the like (not shown) of the motor vehicle 110 via a plurality of actuators in response to inputs from a plurality of sensors 111 or other input devices to control acceleration, steering, and braking, respectively, with no human intervention or limited human intervention. Part of the processing functions of the control apparatus 113 can be implemented by cloud computing. For example, a vehicle-mounted processor may be used to perform some processing, while cloud computing resources may be used to perform other processing. The control apparatus 113 may be configured to perform the method according to the present disclosure. In addition, the control apparatus 113 may be implemented as an example of a computing device of the motor vehicle (client) according to the present disclosure.

The system 100 of FIG. 1 may be configured and operated in various manners, so that the various methods and apparatuses described according to the present disclosure can be applied.

For an autonomous driving task, a multimodal large model, for example, a vision language model (VLM), may be used to understand multimodal data in a driving environment, thereby achieving scenario understanding and autonomous driving reasoning. In related technologies, a VLM model that is trained on visual-text data in a general scenario is usually adjusted through fine-tuning for the autonomous driving task, so that the VLM model has an autonomous driving decision-making capability. However, the VLM model trained in this way does not actually have a deep understanding of information in an autonomous driving scenario, and therefore it is difficult to have a good autonomous driving capability.

To solve the problem described above, the present disclosure provides a novel method for training an autonomous driving model.

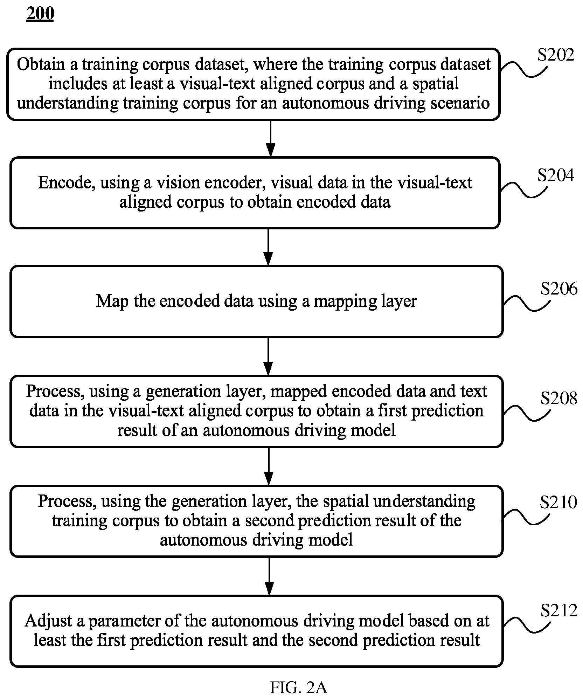

FIG. 2A is an exemplary flowchart of a method for training an autonomous driving model according to an embodiment of the present disclosure.

In this embodiment of the present disclosure, the autonomous driving model may be a VLM model. An exemplary VLM model may include a vision encoder, a mapping layer, and a generation layer.

In step S202, a training corpus dataset may be obtained, where the training corpus dataset includes at least a visual-text aligned corpus and a spatial understanding training corpus for an autonomous driving scenario.

In step S204, visual data in the visual-text aligned corpus may be encoded using the vision encoder, to obtain encoded data.

In step S206, the encoded data may be mapped using the mapping layer.

In step S208, the mapped encoded data and text data in the visual-text aligned corpus may be processed using the generation layer, to obtain a first prediction result of the autonomous driving model.

In step S210, the spatial understanding training corpus may be processed using the generation layer, to obtain a second prediction result of the autonomous driving model.

In step S212, a parameter of the autonomous driving model may be adjusted based on at least the first prediction result and the second prediction result.

The autonomous driving model trained according to the embodiments of the present disclosure has both a multimodal information understanding capability and a reasoning capability in an autonomous driving scenario, and also has general knowledge of the large model, so that the autonomous driving model can well cope with various driving scenarios in an autonomous driving process.

Principles of the present disclosure are described in detail below.

In step S202, the training corpus dataset may be obtained, where the training corpus dataset includes at least the visual-text aligned corpus and the spatial understanding training corpus for the autonomous driving scenario. The visual-text aligned corpus may include a visual-text aligned corpus for a general scenario and a visual-text aligned corpus for the autonomous driving scenario.

The autonomous driving scenario may be a scenario related to a vehicle driving on a road. The general scenario includes any life scenario, other than a vehicle driving scenario, that has a corpus that can be used for training the vision language model. In an example, a general training dataset such as COCO, Flickr30K, and Visual Genome may be used to obtain the visual-text aligned corpus for the general scenario.

The visual-text aligned corpus refers to a dataset that matches and associates image content with corresponding text descriptions. This corpus is usually used to train a machine learning model to understand visual information (such as an image) and linguistic information (such as a sentence or phrase describing the image) and associate them with each other. In the field of multimodal learning, such an alignment relationship may be explicit or implicit.

An alignment task studies an alignment relationship between an image and a sentence, an image and a word, and an object in an image and a phrase in a sentence. Explicit alignment is usually implemented by annotating data, for example, in an image description task, each image is accompanied by one or more sentences describing content of the image. The data may be used to train a model to generate a description of the image or to understand image content mentioned in the description. Implicit alignment refers to identifying an association between an image and a text through a learning ability of the model without explicit annotation. For example, an unsupervised learning method may be used to align images and sentences on the same web page. This method does not require manual annotation, but instead allows the model to learn an underlying association between an image and a text.

By using both the visual-text aligned corpus for the general scenario and the visual-text aligned corpus for the autonomous driving scenario in the training corpus dataset, a trained autonomous driving model may have both a general problem-solving capability and a good understanding capability in the autonomous driving scenario. The visual-text aligned corpus for the general scenario includes information generated in various scenarios in life, and the visual-text aligned corpus for the autonomous driving scenario may include information generated in a driving scenario. By adjusting a proportion of the visual-text aligned corpus for the general scenario and a proportion of the visual-text aligned corpus for the autonomous driving scenario in the training dataset, a training effect of the autonomous driving model may be adjusted, so that the trained autonomous driving model has the general problem-solving capability and also has good understanding and reasoning capabilities in the autonomous driving scenario.

In an example, the visual-text aligned corpus for the autonomous driving scenario may include a corpus describing a status of a vehicle in the autonomous driving scenario (for example, the vehicle is running a red light), a corpus describing road morphology (for example, in an uphill direction or in a downhill direction), a corpus describing road speed limit information (for example, a road speed limit is 100 km/h), a corpus describing a road surface status (for example, the road surface is wet), and a corpus describing a road condition (for example, the traffic is congested, or the traffic is under control).

By acquiring visual-text data in the autonomous driving scenario as a training corpus, the model trained according to the embodiments of the present disclosure can have a better understanding of various information existing in the autonomous driving scenario of the vehicle, thereby enhancing autonomous driving capabilities of the model.

In related technologies, an input object processed by the vision language model is an image and a text, and image data is encoded and mapped into a word embedding space of the text for processing. Therefore, an understanding capability of a model trained on a general corpus derives from context of the text and the image, and the model has a relatively low understanding capability of a three-dimensional space. In related technologies, only applying fine-tuning to cause the vision language model trained on the general corpus to learn reasoning of an autonomous driving task is not sufficient to enable the vision language model to have a capability to understand three-dimensional spatial relationships.

Therefore, the training corpus dataset provided in the embodiments of the present disclosure further includes the spatial understanding training corpus for the autonomous driving scenario. In an example, the spatial understanding training corpus for the autonomous driving scenario may include a positional relationship between subjects in the autonomous driving scenario, for example, a vehicle is located outside of a road. The spatial understanding training corpus for the autonomous driving scenario may further include an aggregation relationship of the subjects in the autonomous driving scenario, for example, there are a total of 3 straight lanes. In addition, scenario information regarding distance constraints in the autonomous driving scenario may also be included, for example, a number of vehicles within a distance of 30 meters, a distance from the nearest road, a distance from the farthest road, etc. By acquiring and constructing the spatial understanding training corpus for the autonomous driving scenario, the model trained according to the embodiments of the present disclosure can better understand spatial relationships between various subjects in the autonomous driving scenario, thereby better understanding situations occurring in the autonomous driving scenario.

In step S204, the visual data in the visual-text aligned corpus may be encoded using the vision encoder, to obtain the encoded data.

In step S206, the encoded data may be mapped using the mapping layer.

In this embodiment of the present disclosure, visual data processed by the model may be at least one of image data or video data. The vision encoder may be configured to encode visual data input into the VLM model, to obtain corresponding encoded image data or encoded video data. In an example, the vision encoder may include a SigLIP model, a VQVAE model, etc. The VQVAE can discretize an image, audio, or a video into token representations. It can be understood that the visual data input into the VLM model may be encoded using any suitable encoding model.

The mapping layer may be used to map the encoded visual data to a space of an embedding vector corresponding to text data, so that the model can subsequently process visual data and text data of multiple modalities together. In an example, the mapping layer may be a multilayer perceptron (MLP). The encoded video data may be mapped to the space of the embedding vector through an embedding matrix codebook to obtain an embedding vector corresponding to the encoded video data, for use in subsequent processing together with the embedding vector corresponding to the text data.

The generation layer may be configured to process the encoded visual data (e.g., embedding vectors corresponding to images or videos) mapped to the space of the embedding vector and text data after word embedding to generate a prediction result. An exemplary generation layer may include a transformer model, or any other model structure capable of implementing natural language processing. In an example, the generation layer may generate predicted embedding vectors, and then convert the embedding vectors into text to obtain a predicted text result. In some examples, a predicted embedding vector output by the generation layer may alternatively be a representation of a predicted video in the space of the embedding vector. The predicted video may be obtained by determining in the codebook an embedding vector closest to the prediction result and decoding the embedding vector.

In step S208, the mapped encoded data and the text data in the visual-text aligned corpus may be processed using the generation layer, to obtain the first prediction result of the autonomous driving model.

The prediction result output by the model may include a text output, such as a text output of general multimodal question answering, a text output of a task such as perception, prediction, reasoning, planning, and control in an autonomous driving task, and a code text output for controlling autonomous driving operations.

When the visual data in the visual-text aligned corpus is video data, the first prediction result may further include a video output. The method 200 may further include: encoding the video data using the video encoder, to obtain encoded video data; mapping, using an embedding matrix, the encoded video data to obtain an embedding vector corresponding to the encoded video data; processing, using the generation layer, at least the embedding vector to obtain a predicted video vector; and decoding, using a video decoder, the predicted video vector to obtain a predicted video.

In some examples, an image in a video may be segmented into squares and the squares are encoded independently, which allows the model to scale to any resolution without requiring position embedding interpolation for the model.

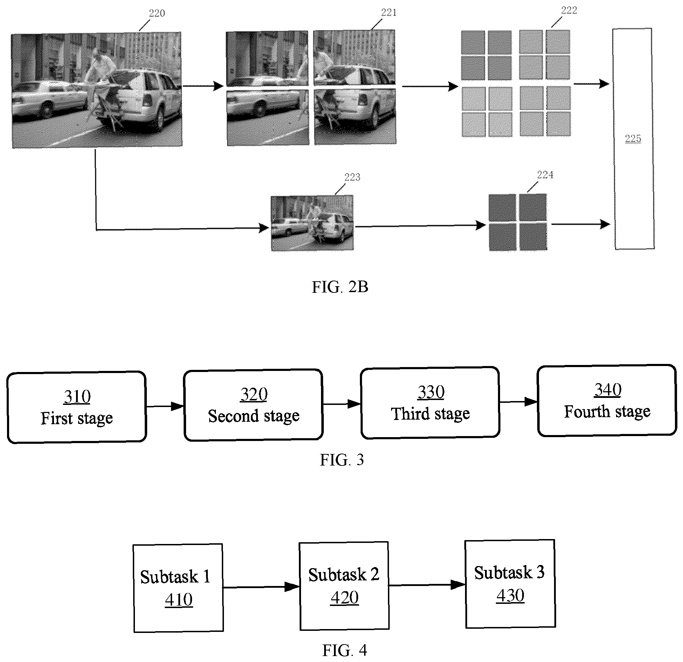

FIG. 2B shows an exemplary process of segmenting and encoding an image.

As shown in FIG. 2B, an image 220 may be segmented to obtain an image 221, where the image 221 includes four sub-images. Each of the four sub-images in the image 221 may then be encoded separately to obtain an encoding result 222 for each region of the image under a high-resolution condition.

In addition, the image 220 may also be resized to obtain an image 223, and then the image 223 may be encoded to obtain an encoding result 224 of the entire image.

The encoding result 222 and the encoding result 224 may then be processed together using a transformer model 225, so that both high-resolution detail information and global context information of the image can be processed. In some examples, key information such as traffic lights may be independently encoded at high resolution by means of image segmentation, in order to improve the capability of the VLM to perceive traffic lights. This can ensure that the model is capable of understanding the key information while reducing the encoded image data.

In step S210, the spatial understanding training corpus may be processed using the generation layer, to obtain the second prediction result of the autonomous driving model.

In step S212, the parameter of the autonomous driving model may be adjusted based on at least the first prediction result and the second prediction result. In some examples, the parameter of the autonomous driving model may be randomly generated. In other examples, the parameter of the autonomous driving model may be a parameter of a pre-trained vision language model. The vision language model mentioned here may be a model trained using only general visual-text aligned data.

The prediction results generated in step S208 and step S210 may be text descriptions corresponding to the input visual data.

In some embodiments, capabilities of the model may be progressively trained and improved through a multi-stage training process. For example, in a first stage of training, the parameter of the autonomous driving model may be adjusted based on the first prediction result. In a second stage following the first stage, the parameter of the autonomous driving model may be adjusted based on the second prediction result.

According to the method for training an autonomous driving model provided in the embodiments of the present disclosure, end-to-end autonomous driving is achieved by treating the autonomous driving task as a native VLM task and designing progressive multi-task learning (perception, prediction, reasoning, planning, and decision-making). By jointly training the multi-task learning of the autonomous driving task and a general task of the VLM, a reasoning capability of the VLM on general knowledge may be retained to the greatest extent.

FIG. 3 is an exemplary flowchart of a training process according to an embodiment of the present disclosure.

As shown in FIG. 3, in a first stage 310 of training, the parameter of the autonomous driving model may be trained using the visual-text aligned corpus in the training corpus dataset. The visual-text aligned corpus may include the visual-text aligned corpus for the general scenario and the visual-text aligned corpus for the autonomous driving scenario. The purpose of the first stage of training is to enable the model to have a capability to align visual data with a text. A massive number of image-text aligned corpora is acquired for pre-training, with the aim of aligning a visual feature well into a word embedding space.

In a second stage 320 following the first stage 310, the autonomous driving model trained in the first stage 310 may be further trained using the spatial understanding training corpus in the training corpus dataset.

In the second stage 320, the autonomous driving model may be trained using both the general corpus and the spatial understanding training corpus. Therefore, it is possible to improve a capability of the model to understand general world knowledge while improving a spatial understanding capability of the model. A final effect of the model may be controlled by adjusting a proportion of the general corpus and the spatial understanding training corpus in the training data used in the second stage 320. That is, a trade-off is made between a general problem-solving capability of the model and a specialized capability of the model for autonomous driving.

The general corpus used in the second stage may be high-quality and high-knowledge-density general corpus that has been screened, which can effectively improve a capability of the model to understand general world knowledge.

The spatial understanding training corpus can improve the spatial understanding capability of the vision language model. In an end-to-end autonomous driving model used in related technologies, the model does not need to implement understanding and reasoning via natural language, but instead, autonomous driving capabilities of the model are trained by acquired spatial sensed data (such as radar data and location data). The spatial sensed data mentioned here itself covers a relative positional relationship in space. Therefore, the end-to-end autonomous driving model has a capability to understand a spatial positional relationship between various subjects in a scenario when making an autonomous driving decision. When the autonomous driving model uses a structure of the vision language model, the model is trained using a corpus as training data. The corpus can only express the positional relationship in space via natural language, unlike radar data which can directly form the positional relationship in space. Therefore, the vision language model trained in related technologies generally has the problem of insufficient spatial understanding capability. Therefore, the present disclosure enhances the spatial understanding capability of the model by using high-quality spatial understanding corpus data in training.

In some embodiments, the training corpus dataset further includes an autonomous driving domain-specific knowledge corpus. In the second stage 320, visual-text corpus data representing the autonomous driving domain-specific knowledge, such as traffic police gesture understanding, traffic light knowledge, and traffic signs, may also be used as the training corpus. In the second stage, the generation layer may be used to process the autonomous driving domain-specific knowledge corpus to obtain a third prediction result of the autonomous driving model, and the parameter of the autonomous driving model may be adjusted based on the third prediction result.

In a third stage 330, visual instruction alignment tasks may be performed. In some examples, a general multimodal instruction alignment task, an autonomous driving domain-specific instruction alignment task, an autonomous driving chain-of-thought reasoning strategy capability alignment task, and an autonomous driving code generation capability alignment task may be implemented in the third stage 330.

The instruction alignment task can train the model to give appropriate feedback to an input instruction. In some embodiments, the training corpus dataset may further include instruction training data, where the instruction training data includes an input instruction and a sample response corresponding to the input instruction. In the third stage 330 following the second stage, the generation layer may be used to process the input instruction to obtain a predicted response of the autonomous driving model, and the parameter of the autonomous driving model may be adjusted based on a difference between the predicted response and the sample response.

Instruction training data used in the general multimodal instruction task is a general instruction, which can maintain a general capability of the model on the basis of the training in the second stage, while improving the understanding capability of the model to align with long-tail scenarios in autonomous driving.

Instruction training data used in the autonomous driving domain-specific instruction alignment task is an instruction involved in the autonomous driving scenario, which can train the model to understand a user intention in the autonomous driving scenario.

The autonomous driving chain-of-thought reasoning strategy capability alignment task is used to train the model to output a prediction result based on a predetermined decision-making process, which can improve the robustness and decision-making capability of the model.

The autonomous driving code generation capability alignment task can improve the capability of the model to generate calling code. In some embodiments, a predicted reasoning result output by the model includes code for calling an autonomous driving system. By training the model to output a prediction result in the form of calling code, it is possible to call a robust basic capability of an autonomous driving control system.

FIG. 4 shows an exemplary process of a chain-of-thought reasoning strategy according to an embodiment of the present disclosure.

In some embodiments, the training corpus dataset further includes instruction training data and chain-of-thought reasoning training data, where the chain-of-thought reasoning training data includes a sample input image and a sample reasoning result corresponding to the sample input image. In the third stage, the vision encoder may be used to encode the sample input image to obtain an encoded sample input; the mapping layer may be used to map the encoded sample input; the generation layer may be used to process the mapped encoded sample input to obtain a predicted reasoning result of the autonomous driving model, where the predicted reasoning result includes at least one subtask prediction result; and the parameter of the autonomous driving model may be adjusted based on a difference between the predicted reasoning result and the sample reasoning result. In an example, the at least one subtask prediction result is output according to a predefined subtask order, and to output each subtask prediction result, content of at least one other subtask prediction result output previously is taken into consideration. Those skilled in the art may set a number and an order of subtasks, and a previous output result that needs to be taken into consideration for each subtask output, based on actual situations. Here, the present disclosure does not impose any limitation on a specific manner of chain-of-thought reasoning.

The chain-of-thought reasoning is a sequential processing method in which a complex task is broken down into a series of logical steps, with the aim of reducing task complexity and improving performance. This reasoning method is similar to an intermediate-step strategy that humans use when handling complex tasks. The chain-of-thought reasoning is applied in explainable artificial intelligence (XAI), and it can provide explanations for network prediction, which is particularly important in safety-related tasks such as driving or medical care. With the rise of large language models (LLMs), the chain-of-thought reasoning has shown performance advantages in commonsense tasks and application-oriented tasks (such as robotics and autonomous driving).

A process of chain-of-thought (COT) reasoning of an autonomous driving system based on the multimodal large model is shown in FIG. 4, in which there are three subtasks 410, 420, and 430:
The subtask 410 for scenario description or identification: surroundings are described first, such as a state of a traffic light, locations of vehicles and pedestrians, and driving intentions of surrounding vehicles.

The subtask 420 for scenario analysis: decisions are made separately based on each piece of key information, for example, deciding whether to move forward by analyzing the state of the traffic light, deciding whether to make an avoidance action based on the locations of the vehicles and pedestrians, and deciding whether to decelerate based on the driving intentions of the surrounding vehicles.

The subtask 430 for reasoning and decision-making: the final decision is made and a reason is given based on the previous analysis. For example, the decision is to go straight, turn left, or turn right, and a reason for the decision is given, for example, in natural language, to increase the explainability of the decision. Then, an action instruction, for example, a waypoint after a predetermined time (0.5 seconds), may be given based on an output result of the decision.

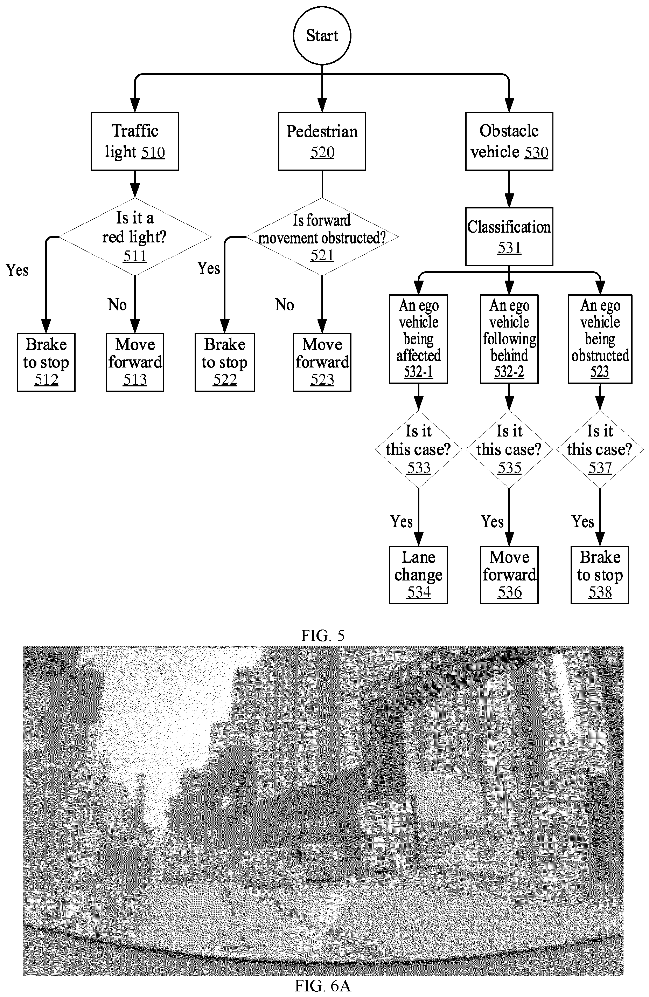

FIG. 5 is a flowchart of chain-of-thought reasoning according to an embodiment of the present disclosure.

In a branch task 510 for a traffic light, in step 511, a model is controlled to determine whether the traffic light is in a red state. In response to determining that the traffic light is in a red state, a prediction result of braking to stop a vehicle is output in step 512. In response to determining that the traffic light is not in a red state, a prediction result of the vehicle moving forward is output in step 513.

In a branch task 520 for a pedestrian, in step 521, the model is controlled to determine whether a pedestrian is obstructing the vehicle from moving forward. In response to determining that the pedestrian is obstructing the vehicle from moving forward, a prediction result of braking to stop the vehicle is output in step 522. In response to determining that the pedestrian does not obstruct the vehicle from moving forward, a prediction result of the vehicle moving forward is output in step 523.

In a branch task 530 for an obstacle vehicle, in step 531, the model is controlled to classify an obstacle vehicle in a current scenario; and classification results 532-1, 532-2, and 532-3 are obtained. In response to determining in step 533 that an obstacle vehicle that affects forward movement of an ego vehicle exists in the current scenario, in step 534, a prediction result of the vehicle performing lane changing is output. In response to determining in step 535 that an obstacle vehicle that is followed by the ego vehicle exists in the current scenario, a prediction result of the vehicle moving forward is output in step 536. In response to determining in step 537 that an obstacle vehicle that is obstructing the ego vehicle from moving forward exists in the current scenario, in step 538, a prediction result of the vehicle braking to stop is output.

The autonomous driving code generation capability alignment task may be implemented in conjunction with the chain-of-thought reasoning strategy.

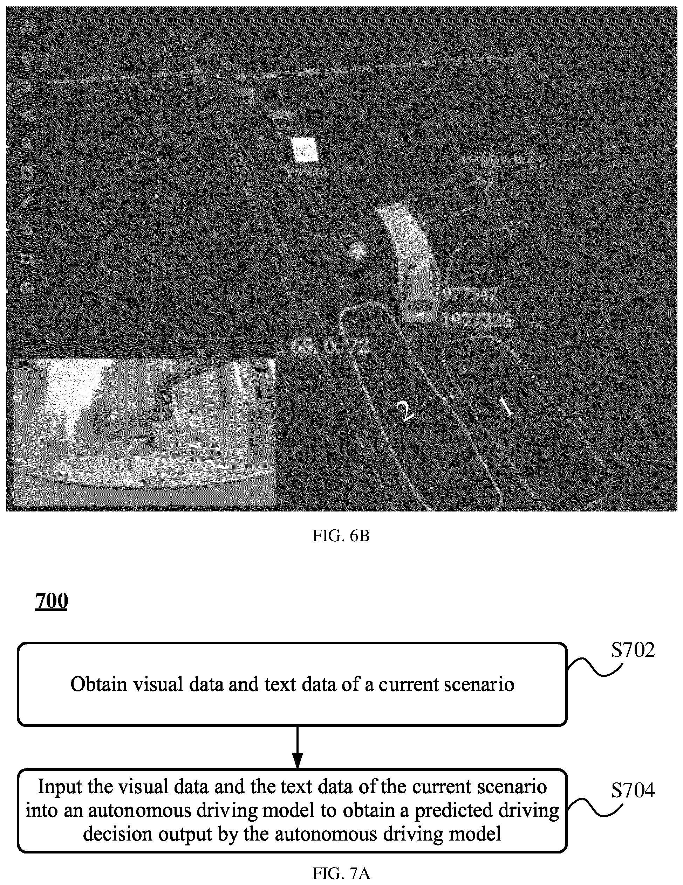

FIGs. 6A and 6B show input images used in an exemplary chain-of-thought reasoning process. FIG. 6A shows an example of an image of a front-facing camera with numbered obstacles. A arrow represents a current planned direction for an ago vehicle. FIG. 6B shows a bird's-eye-view (BEV) image with a drivable area, where a vehicle 1 is the ego vehicle. The subtasks of chain-of-thought reasoning are as follows:
Task 1: Analyze the numbered obstacle and identify a key obstacle that affects a decision of the ego vehicle.
Task 2: Analyze a relationship between the drivable area and the ego vehicle.
Task 3: Based on the previous analysis, plan a macro action and return a code used for calling an API.

According to requirements of the subtask, the model may output the following results:

### Task 1: Front-facing camera obstacle analysis

Based on the first image from a front-facing camera, an analysis of obstacles and a determination of whether the obstacles affect a path of the vehicle are provided as follows.

```
       { "
       front-facing camera obstacles": [
       {
       "id": 1,
       "type": "dynamic",
       "speed": "0.5 m/s",
       "direction": "none",
       "in path": true,
       "reason": "This obstacle is located directly
in front of the vehicle, near the gate, and poses
 a potential collision risk."
       },
       {
       "id": 2,
       "type": "static",
       "in path": false,
       "reason": "This static obstacle is located on
the right side of the road, out of the driving
       path of the vehicle."
       },
       {
       "id": 3,
       "type": "dynamic",
       "speed": "0",
       "direction": "none",
       "in path": false,
       "reason": "This obstacle is a parked truck
located to the left and not in the driving path of
 the vehicle."
       },
       {
       "id": 4,
       "type": "static",
       "in path": false,=
       "reason": "This obstacle is located beside the road and out of the driving path of the
 vehicle."
       },
       {
       "id": 5,
       "type": "static",
       "in path": false,
       "reason": "This obstacle is located by the
 roadside and does not interfere with the path of
 the vehicle."
       },
       {
       "id": 6,
       "type": "static",
       "in path": true,
       "reason": "This obstacle (possibly a motorcycle
or another static object) is located by the
       roadside, near the path of the vehicle, and may affect forward movement of the vehicle."
       }
       ]
       }
```

### Key obstacles

Obstacles that may interfere with the driving path of the vehicles include the following:
- Obstacle 1: the obstacle is dynamic, located directly in front of the vehicle, moving at a speed of 0.5 m/s, posing a potential collision risk.
- Obstacle 6: the obstacle is static, near the path ahead of the vehicle, potentially affecting the forward movement of the vehicle.

### Task 2: Bird's-eye-view (BEV) data analysis

Based on the second image (bird's eye view), analysis of the drivable area is provided as follows:

```
       { "
       bird's-eye-view data": {
       "vehicle": {
       "location": "blue vehicle",
       "direction": "forward"
       },
       "drivable area": [
       {
       "id": 1,
       "description": "located in the rear area, in the same lane, allowing forward driving"
       },
       {
       "id": 2,
       "description": "in the adjacent lane on the left, allowing driving"
       },
       {
       "id": 3,
       "description": "located in the front area, in the same lane, allowing driving"
       }
       ] } }
```

### Task 3: Macro action planning

Based on the analysis of task 1 and task 2, the following macro actions are recommended, and an API call for each step is provided:

### Action step 1: Reverse to area 1

- Obstacle 1: the obstacle is dynamic, located directly in front of the vehicle, moving at a speed of 0.5 m/s, posing a potential collision risk.
- Obstacle 6: the obstacle is static, near the path ahead of the vehicle, potentially affecting the forward movement of the vehicle.
- Action: Reverse
- Target drivable area: Area 1 (rear area, in the same lane)
- Reason: There are dynamic and static obstacles (obstacle 1 and obstacle 6) in front of the vehicle that may hinder forward movement. Reversing allows the vehicle to avoid these obstacles.

```
       {
       "action": "reverse", "target area": 1,
"reason": "there are dynamic and static obstacles in
 front of the vehicle. Reversing can prevent a potential collision."
       }
       
```

API call:
   vehicle.move_backward(target_area=1, distance=5) # Adjust a distance as needed
Action step 2: Turn left into area 2
   - Action: Turn left
   - Target drivable area: Area 2 (in the adjacent lane on the left)
Reason: The left lane is clear and turning left allows the vehicle to avoid the dynamic obstacle ahead and continue moving forward.

```
{
       "action": "turn left", "target area": 2, "reason":
"there is no obstacle in the adjacent lane on
 the left, allowing the vehicle to avoid the obstacle ahead and continue driving."
       }
       
```

API call:
   vehicle.turn_left(target_area=2, angle=45) # Adjust an angle as needed
Action step 3: Move forward
Action: Move forward
Reason: After the obstacle is avoided, the vehicle can return to the main lane and continue moving forward safely.

```
{
       "action": "move forward", "target area": "lane ahead", "reason": "after the obstacle is
 avoided, the vehicle can return to the main lane and continue driving safely."
       }
       
```

API call:
   vehicle.move_forward(target_area="front lane", distance=10) # Adjust a distance as needed

Referring back to FIG. 3, the training method according to the embodiment of the present disclosure further includes a fourth stage 340. In the fourth stage, feedback learning may be used to further train the capabilities of the model.

In some embodiments, in the fourth stage, a video generation capability of the model trained according to the first stage 310 to the third stage 330 may be used to make future prediction, and direct preference optimization (DPO) training may be performed on the model based on prediction results. Direct preference optimization (DPO) is a method for optimizing large language models. It directly adjusts parameters of the model based on human preference data, bypassing fitting of an explicit reward model and a complex reinforcement learning optimization process. The core idea of the DPO is to directly use maximum likelihood estimation (MLE) to optimize the strategy, so as to efficiently learn the optimal strategy consistent with human preferences.

In some embodiments, during the fourth stage of training, the generation layer may be used to process an embedding vector of visual data input into the model and at least one given driving action to obtain the predicted video vector.

The at least one given driving action may be generated through sampling. The given driving action may be obtained through sampling from a predetermined action library. A predicted vector corresponding to the predicted video may be generated based on the given driving action obtained through sampling, combined with a current state of the autonomous vehicle (such as a speed, a direction, or an acceleration) and a current driving scenario (such as a route or a driving environment), and the predicted vector may be decoded to obtain a final predicted video.

When generating the predicted video vector, the model may also output a generation probability of the predicted video vector. The generation probability of the predicted video vector may be determined as a reward value for the at least one given driving action, and the direct preference optimization may be performed on the autonomous driving model based on the given driving action and the reward value. A given driving action and a reward value that is a generation probability of a corresponding predicted video may form a partial order pair used in DPO training. Those skilled in the art can perform a DPO algorithm according to any suitable method to implement optimization of the autonomous driving model.

In some embodiments, in the fourth stage, DPO training may also be performed on the model based on simulation environment feedback.

Information from a simulation environment may be input into the autonomous driving model to obtain a simulated prediction result. For example, at least one simulated driving action and simulated visual-text information of a driving scenario in the simulation environment may be obtained. The at least one simulated driving action may be determined through sampling. Visual data in the simulated visual-text information is encoded using the encoding layer, to obtain encoded simulation data; the encoded simulation data is mapped using the mapping layer; and the mapped encoded simulation data and text data in the simulated visual-text information are processed using the generation layer, to obtain a simulated prediction result of the autonomous driving model.

The simulated prediction result output by the autonomous driving model may then be deployed in the simulation environment. For example, the simulated prediction result may be executed in the simulation environment; simulation feedback generated in the simulation environment for prediction of the simulated prediction result may be obtained; and direct preference optimization may be performed on the autonomous driving model based on the simulated driving action and the simulation feedback. For example, the simulation environment feedback may be determined as a reward value for an input simulated driving action, and the DPO training may be performed on the autonomous driving model using a partial order pair including the simulated driving action and the simulation feedback.

FIG. 7A is an exemplary flowchart of an autonomous driving method according to an embodiment of the present disclosure.

As shown in FIG. 7A, in step S702, visual data and text data of a current scenario may be obtained. The visual data may include an image or a video of the current scenario. The text data may include a text for describing the current driving scenario, for example, a text describing a current driving environment, a driving route, a vehicle state, etc.

In step S704, the visual data and the text data of the current scenario may be input into an autonomous driving model to obtain a predicted driving decision output by the autonomous driving model, and the vehicle may be controlled to perform autonomous driving based on the predicted driving decision. The autonomous driving model used in the method 700 may be trained using the method for training an autonomous driving model described with reference to FIGs. 2 to 6.

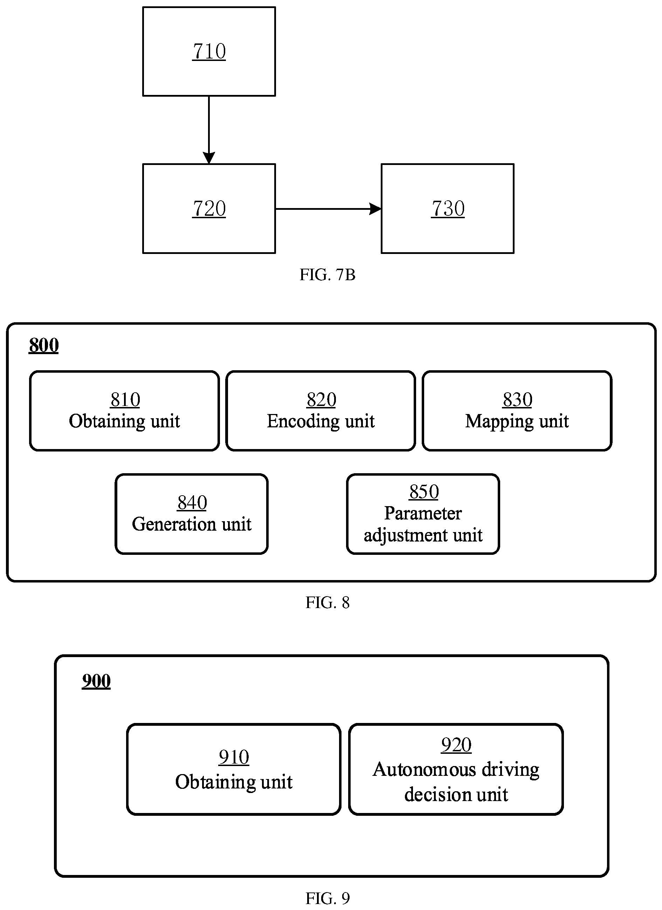

FIG. 7B is an exemplary structure of an autonomous driving model according to an embodiment of the present disclosure. The autonomous driving model shown in FIG. 7B may be trained using the training method described with reference to FIGs. 2 to 6B, and a final parameter of the model is obtained.

As shown in FIG. 7B, the autonomous driving model may include an encoding layer 710, a mapping layer 720, and a generation layer 730.

The encoding layer 710 may be a vision encoder SigLIP, the mapping layer 720 may be a multilayer perceptron MLP structure, and the generation layer 730 may be a transformer structure.

The visual data input into the encoding layer 710 may include map information and sensor information. The map information may include positioning information of an ego vehicle (i.e., the autonomous vehicle), road topology information, etc. The sensor information may include image information acquired by an image sensor and point cloud information acquired by a radar. In a high-delay solution, a plurality of cameras (for example, six cameras) may be arranged on the autonomous vehicle to form a surround-view camera. In a low-delay solution, only a front-facing camera may be arranged.

The encoding layer 710 may encode the input visual data to obtain encoded data, and the mapping layer 720 may map the encoded data, for example, mapping the encoded data into a space of embedding vectors.

The generation layer 730 may process the mapped encoded data and input text data to obtain an output result of the autonomous driving model. Exemplary text data includes an ego vehicle state, a navigation instruction, a road speed limit, a user instruction, etc. Embedding processing may be performed on the input text data to obtain a corresponding embedding vector. Based on the mapped encoded data and the text data, the generation layer may output at least one of the following: a text output of general multimodal question answering; a perception result, a prediction result, a reasoning result, a planning result, a control result, and an API calling code generation result of the autonomous driving system, in a chain-of-thought reasoning process of autonomous driving decision-making; and a video generation result predicted for the future.

FIG. 8 is an exemplary block diagram of an apparatus for training an autonomous driving model according to an embodiment of the present disclosure. The method for training an autonomous driving model described with reference to FIGs. 2 to 6 may be implemented using the apparatus 800 shown in FIG. 8.

As shown in FIG. 8, the apparatus 800 may include an obtaining unit 810, an encoding unit 820, a mapping unit 830, a generation unit 840, and a parameter adjustment unit 850.

The obtaining unit 810 may be configured to obtain a training corpus dataset, where the training corpus dataset includes at least a visual-text aligned corpus and a spatial understanding training corpus for an autonomous driving scenario.

The encoding unit 820 may be configured to encode, using a vision encoder, visual data in the visual-text aligned corpus to obtain encoded data.

The mapping unit 830 may be configured to map the encoded data using a mapping layer.

The generation unit 840 may be configured to process, using a generation layer, the mapped encoded data and text data in the visual-text aligned corpus to obtain a first prediction result of the autonomous driving model, and process, using the generation layer, the spatial understanding training corpus to obtain a second prediction result of the autonomous driving model.

The parameter adjustment unit 850 may be configured to adjust a parameter of the autonomous driving model based on at least the first prediction result and the second prediction result.

FIG. 9 is an exemplary block diagram of an autonomous driving apparatus according to an embodiment of the present disclosure. The method for training an autonomous driving model described with reference to FIG. 7 may be implemented using the apparatus 900 shown in FIG. 9.

The autonomous driving apparatus 900 may include an obtaining unit 910 and an autonomous driving decision unit 920.

The obtaining unit 910 may be configured to obtain visual data and text data of a current scenario.

The autonomous driving decision unit 920 may be configured to input the visual data and the text data of the current scenario into an autonomous driving model to obtain a predicted driving decision output by the autonomous driving model, and control a vehicle to perform autonomous driving based on the predicted driving decision. The autonomous driving model is trained using the method for training an autonomous driving model described with reference to FIGs. 2 to 6.

It should be understood that modules or units of the apparatuses 800 and 900 shown in FIGs. 8 and 9 may correspond to the steps in the method 200 described with reference to FIG. 2 and method 700 described with reference to FIG. 7. Therefore, the operations, features, and advantages described above for the methods 200 and 700 are also applicable to the apparatuses 800 and 900 and the modules and units included therein. For the sake of brevity, some operations, features, and advantages are not described herein again.

Although specific functions are discussed above with reference to specific modules, it should be noted that the functions of the various units discussed herein may be divided into a plurality of units, and/or at least some functions of the plurality of units may be combined into a single unit.

In the technical solutions of the present disclosure, obtaining, storage, application, etc. of personal information of a user all comply with related laws and regulations and are not against the public order and good morals.

According to an embodiment of the present disclosure, an electronic device is further provided, including: at least one processor; and a memory communicatively connected to the at least one processor, where the memory stores instructions executable by the at least one processor, and the instructions, when executed by the at least one processor, cause the at least one processor to perform the method according to the embodiments of the present disclosure.

According to an embodiment of the present disclosure, a non-transitory computer-readable storage medium storing computer instructions is further provided. The computer instructions are used to cause a computer to perform the method according to the embodiments of the present disclosure.

According to an embodiment of the present disclosure, a computer program product is further provided, including a computer program, where the computer program, when executed by a processor, causes the method according to the embodiments of the present disclosure to be implemented.

According to an embodiment of the present disclosure, an autonomous vehicle is further provided. The vehicle includes the autonomous driving apparatus described above or the electronic device described above.

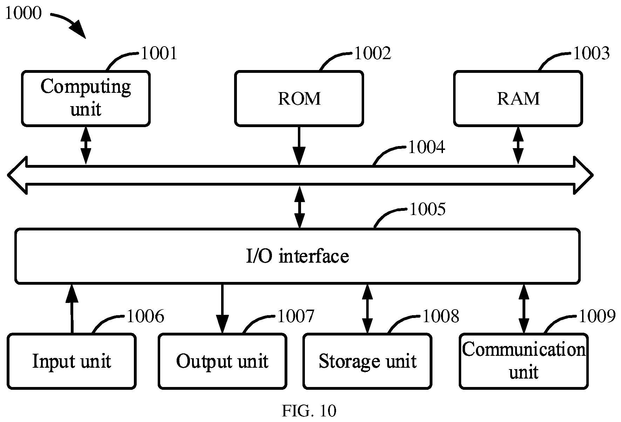

Referring to FIG. 10, a structural block diagram of an electronic device 1000 will be described below, which can serve as a server or a client of the present disclosure and is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown in the present specification, their connections and relationships, and their functions are merely examples, and are not intended to limit the implementation of the present disclosure described and/or required herein.

As shown in FIG. 10, the electronic device 1000 includes a computing unit 1001, the computing unit may perform various appropriate actions and processing according to a computer program stored in a read-only memory (ROM) 1002 or a computer program loaded from a storage unit 1008 to a random access memory (RAM) 1003. The RAM 1003 may further store various programs and data required for the operation of the electronic device 1000. The computing unit 1001, the ROM 1002, and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, an output unit 1007, the storage unit 1008, and a communication unit 1009. The input unit 1006 may be any type of device capable of inputting information to the electronic device 1000, the input unit 1006 may receive input digit or character information and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1007 may be any type of device capable of presenting information, and may include, but is not limited to, a display, a speaker, a video/audio output terminal, a vibrator, and/or a printer. The storage unit 1008 may include, but is not limited to, a magnetic disk and an optical disk. The communication unit 1009 allows the electronic device 1000 to exchange information/data with other devices via a computer network such as the Internet and/or various telecommunication networks, and may include, but is not limited to, a modem, a network interface card, an infrared communication device, a wireless communication transceiver, and/or a chipset, for example, a Bluetooth^{™} device, an 802.11 device, a Wi-Fi device, a WiMax device, and/or a cellular communication device.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units on which machine learning model algorithms run, a digital signal processor (DSP), and any appropriate processor, controller, microcontroller, etc. The computing unit 1001 performs various methods and processes described above, for example, the methods 200 and 700. For example, in some embodiments, the methods 200 and 700 may be implemented as computer software programs, which may be tangibly included in a machine-readable medium, for example, the storage unit 1008. In some embodiments, a part or all of the computer program may be loaded and/or installed onto the electronic device 1000 via the ROM 1002 and/or the communication unit 1009. When the computer program is loaded onto the RAM 1003 and executed by the computing unit 1001, one or more steps of the methods 200 and 700 described above may be performed. Alternatively, in another embodiment, the computing unit 1001 may be configured to perform the methods 200 and 700 in any other proper manner (for example, by using firmware).

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data server), in a computing system including a middleware component (for example, an application server), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), the Internet, and a blockchain network.

A computer system may include a client and a server. The client and the server are generally far away from each other and usually interact through a communication network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, successively, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A method for training an autonomous driving model, wherein the autonomous driving model comprises a vision encoder, a mapping layer, and a generation layer, and the method comprises:
obtaining (S202) a training corpus dataset, wherein the training corpus dataset comprises at least a visual-text aligned corpus and a spatial understanding training corpus for an autonomous driving scenario;
encoding (S204), using the vision encoder, visual data in the visual-text aligned corpus to obtain encoded data;
mapping (S206) the encoded data using the mapping layer;
processing (S208), using the generation layer, the mapped encoded data and text data in the visual-text aligned corpus to obtain a first prediction result of the autonomous driving model;
processing (S210), using the generation layer, the spatial understanding training corpus to obtain a second prediction result of the autonomous driving model; and
adjusting (S212) a parameter of the autonomous driving model based on at least the first prediction result and the second prediction result.

2. The method according to claim 1, wherein the visual-text aligned corpus comprises a visual-text aligned corpus for a general scenario and a visual-text aligned corpus for the autonomous driving scenario.

3. The method according to any one of claims 1-2, wherein adjusting the parameter of the autonomous driving model based on at least the first prediction result and the second prediction result comprises:
in a first stage of training, adjusting the parameter of the autonomous driving model based on the first prediction result; and
in a second stage following the first stage, adjusting the parameter of the autonomous driving model based on the second prediction result.

4. The method according to claim 3, wherein the training corpus dataset further comprises an autonomous driving domain-specific knowledge corpus, and the method further comprises:
in the second stage, processing, using the generation layer, the autonomous driving domain-specific knowledge corpus to obtain a third prediction result of the autonomous driving model; and
adjusting the parameter of the autonomous driving model based on the third prediction result.

5. The method according to claim 3, wherein the training corpus dataset further comprises instruction training data, wherein the instruction training data comprises an input instruction and a sample response corresponding to the input instruction, and the method further comprises:
in a third stage following the second stage, processing, using the generation layer, the input instruction to obtain a predicted response of the autonomous driving model; and
adjusting the parameter of the autonomous driving model based on a difference between the predicted response and the sample response.

6. The method according to claim 5, wherein the training corpus dataset further comprises instruction training data and chain-of-thought reasoning training data, wherein the chain-of-thought reasoning training data comprises a sample input image and a sample reasoning result corresponding to the sample input image, and the method further comprises:
in the third stage, encoding the sample input image using the vision encoder to obtain an encoded sample input;
mapping the encoded sample input using the mapping layer;
processing, using the generation layer, the mapped encoded sample input to obtain a predicted reasoning result of the autonomous driving model, wherein the predicted reasoning result comprises at least one subtask prediction result; and
adjusting the parameter of the autonomous driving model based on a difference between the predicted reasoning result and the sample reasoning result.

7. The method according to claim 6, wherein the at least one subtask prediction result is output according to a predefined subtask order, and to output each subtask prediction result, content of at least one other subtask prediction result output previously is taken into consideration.

8. The method according to claim 6, wherein the predicted reasoning result comprises code for calling an autonomous driving system.

9. The method according to any one of claims 1 to 8, wherein the visual data in the visual-text aligned corpus comprises video data.

10. The method according to claim 9, wherein the vision encoder comprises a video encoder, and the method further comprises:
encoding the video data using the video encoder, to obtain encoded video data;
mapping, using an embedding matrix, the encoded video data to obtain an embedding vector corresponding to the encoded video data;
processing, using the generation layer, at least the embedding vector to obtain a predicted video vector; and
decoding, using a video decoder, the predicted video vector to obtain a predicted video.

11. The method according to claim 10, wherein processing, using the generation layer, at least the embedding vector to obtain the predicted video vector comprises:
processing, using the generation layer, the embedding vector and at least one given driving action to obtain the predicted video vector.

12. The method according to claim 11, further comprising:
determining a generation probability of the predicted video vector as a reward value for the at least one given driving action; and
performing direct preference optimization on the autonomous driving model based on the given driving action and the reward value.

13. The method according to any one of claims 1 to 8, further comprising:
obtaining at least one simulated driving action and simulated visual-text information of a driving scenario in a simulation environment;
encoding, using the vision encoder, visual data in the simulated visual-text information to obtain encoded simulation data;
mapping the encoded simulation data using the mapping layer;
processing, using the generation layer, the mapped encoded simulation data and text data in the simulated visual-text information to obtain a simulated prediction result of the autonomous driving model;
executing the simulated prediction result in the simulation environment;
obtaining simulation feedback generated in the simulation environment for prediction of the simulated prediction result; and
performing direct preference optimization on the autonomous driving model based on the simulated driving action and the simulation feedback.

14. An autonomous driving method, comprising:
obtaining (S702) visual data and text data of a current scenario; and
inputting (S704) the visual data and the text data of the current scenario into an autonomous driving model to obtain a predicted driving decision output by the autonomous driving model, and controlling a vehicle to perform autonomous driving based on the predicted driving decision, wherein the autonomous driving model is trained using the method according to any one of claims 1 to 13.

15. An autonomous driving apparatus, comprising:
an obtaining unit configured to obtain visual data and text data of a current scenario; and
an autonomous driving decision unit configured to input the visual data and the text data of the current scenario into an autonomous driving model to obtain a predicted driving decision output by the autonomous driving model, and control a vehicle to perform autonomous driving based on the predicted driving decision, wherein the autonomous driving model is trained using the method according to any one of claims 1 to 13.
